# EUROPÄISCHE PATENTSCHRIFT

(11) **EP 3 765 782 B1**
(45) Veröffentlichungstag und Bekanntmachung des Hinweises auf die Patenterteilung: **04.09.2024**
(21) Anmeldenummer: 19705485.1
(22) Anmeldetag: 13.02.2019
(51) Int. Cl.: F21S 43/20, F21S 43/50, F21S 43/14, F21S 43/15, B60Q 1/32, B60Q 1/26, B60Q 1/50, B60Q 3/74

(54) **BELEUCHTUNGSVORRICHTUNG FÜR FAHRZEUGE**
ILLUMINATION APPARATUS FOR VEHICLES
DISPOSITIF D'ÉCLAIRAGE POUR VÉHICULES

(30) Priorität: 15.03.2018 DE 102018106035
(43) Veröffentlichungstag der Anmeldung: 20.01.2021
(73) Patentinhaber: HELLA GMBH & CO. KGAA, 59552 Lippstadt (DE)
(72) Erfinder: MÜGGE, Martin, 59590 Geseke (DE)
(86) Internationale Anmeldenummer: PCT/EP2019/053544
(87) Internationale Veröffentlichungsnummer: WO 2019/174840

(56) Entgegenhaltungen:
- EP-A1- 1 528 527
- EP-A1- 2 677 232
- EP-A2- 2 827 049
- DE-A1- 102015 224 305
- DE-A1- 2 748 947
- TW-A- 201 122 708
- US-A- 4 733 335
- US-A- 6 152 590
- US-A1- 2008 013 329
- US-A1- 2013 170 203

## Beschreibung

Die Erfindung betrifft eine Beleuchtungsvorrichtung nach dem Oberbegriff des Patentanspruchs 1.

Aus der DE 10 2009 023 916 B4 ist eine Beleuchtungsvorrichtung für Fahrzeuge bekannt, die eine Mehrzahl von Lichtquellen und eine Mehrzahl von als Linsen ausgebildete Lichtführungselemente aufweist zur Erzeugung einer vorgegebenen Lichtverteilung. Den Lichtquellen ist jeweils ein Linsenelement zugeordnet, damit beispielsweise eine langgestreckte Fläche einer Zusatzbremsleuchte effektiv ausgeleuchtet wird. Soll beispielsweise ein Einstiegsbereich eines Fahrzeugs ausgeleuchtet werden, ist es wünschenswert, nicht nur den vorgegebenen Einstiegsbereich auszuleuchten, sondern darüber hinaus zumindest einen Teil des Einstiegsbereiches von der Farbe und/oder von der Helligkeit her zu verändern. Hierdurch kann ein fahrzeugherstellerabhängige markentypische Farb- und/oder Helligkeitsgrafik erzeugt werden, die gegebenenfalls auch Informationen über den Fahrzeugzustand (Schließ- oder Öffnungszustand) liefert. Um solche "intelligenten" Ausleuchtgrafiken zu erzeugen, weist die bekannte Beleuchtungsvorrichtung den Nachteil auf, dass sie einen relativ großen Bauraum erfordert.

Aus der DE 10 2014 110 599 A1 ist eine Beleuchtungsvorrichtung für Fahrzeuge bekannt, die eine Mehrzahl von Lichtquellen sowie Lichtführungselemente aufweist zur Erzeugung einer adaptiven Fernlichtverteilung. Die Lichtführungselemente sind in einer Primäroptikeinheit und in einer Sekundäroptikeinheit zusammengefasst. Die Primäroptikeinheit weist eine Mehrzahl von Mikrolinsen als Lichtführungselemente auf, mittels derer bauraumsparend ein homogenisiertes Zwischenbild erzeugt werden kann. Somit kann hierdurch lediglich eine homogene Ausleuchtfläche erzeugt werden.

Aus der EP 2 677 232 A1 ist eine Beleuchtungsvorrichtung für Fahrzeuge mit einer Mehrzahl von Lichtquellen, denselben zugeordneten Mikrolichtführungselementen sowie einer optischen Trennung bekannt. Die optische Trennung ist jedoch lediglich zwischen den Lichtquellen angeordnet und erstreckt sich von einer Leiterplatte der Lichtquelle her in Lichtabstrahlungsrichtung.

Aus der TW 201 122 708 A ist eine Beleuchtungsvorrichtung für Fahrzeuge mit einer Mehrzahl von Lichtquellen und jeweils denselben zugeordneten Lichtführungselementen bekannt. Die Lichtführungselemente sind als Mikrolichtführungselemente ausgebildet, zwischen denen sich optische Trennungen zur Vermeidung eines Kreuzens von Licht zwischen zwei benachbarten Mikrolichtführungselementen vorgesehen sind. Dadurch, dass die optischen Trennungen lediglich zwischen dem Mikrolichtführungselement angeordnet sind, müssen dieselben zusammen mit den Mikroführungslinsen hergestellt werden.

Aufgabe der vorliegenden Erfindung ist es, eine Beleuchtungsvorrichtung für Fahrzeuge derart weiterzubilden, dass bauraumsparend eine Mehrzahl von hinsichtlich Helligkeit und/oder Farbe unterschiedliche Leuchtgrafiken mit einer eindeutigen Kanaltrennung zur Vermeidung von Streulicht bzw. Falschlicht erzeugt werden können.

Zur Lösung dieser Aufgabe weist die Erfindung die Merkmale des Patentanspruchs 1 auf.

Nach der Erfindung weist die Beleuchtungsvorrichtung eine Mehrzahl von Mikrolichtführungselementen auf, denen jeweils eine einzige Lichtquelle zugeordnet ist. Durch die relativ kleindimensionierten Mikrolichtführungselement-Lichtquellen-Paare lässt sich eine Lichtverteilung bzw. Ausleuchtgrafik hoher Auflösung erzielen. Durch entsprechende Ansteuerung der Lichtquellen kann die Ausleuchtgrafik vorgegebene Bereiche hoher und niedriger Helligkeit bzw. einer ersten und zweiten Farbe aufweisen. Vorteilhaft kann hierdurch eine Leuchtgrafik eines bestimmten Musters hinsichtlich der Fläche und/oder der Zeit erzeugt werden. Durch die Integration von optischen Trennungen zwischen benachbarten Mikrolichtführungselementen wird sichergestellt, dass kein Streulichtanteil eines für ein erstes Mikrolichtführungselement zugewiesenen Lichtes einer ersten Lichtquelle über ein benachbartes Mikrolichtführungselement abgestrahlt wird. Vorteilhaft kann somit eine Ausleuchtgrafik beispielsweise mit einem Farbmuster hoher Auflösung und geringer Unschärfe bereitgestellt werden. Die optischen Trennungen führen zu einer Kanalisierung des Lichtes, wobei von den Mikrolichtführungselementen ausschließlich das Licht des denselben zugeordneten Lichtquellen umgeformt bzw. abgestrahlt wird. Ein unerwünschtes Kreuzen oder Überscheinen von Licht benachbarter "Lichtkanäle" kann somit sicher vermieden werden. Die erfindungsgemäße Beleuchtungsvorrichtung ermöglicht somit eine farbgetreue und scharfe Ausleuchtgrafik.

Nach der Erfindung sind die Mikrolichtführungselemente als Mikrolinsenelemente ausgebildet. Benachbarte optische Trennungen sind in einem Abstand zwischen 0,1 mm und 3 mm angeordnet. Vorteilhaft ermöglichen die Mikrolinsenelemente eine farbgetreue und scharfe Lichtabbildung bzw. Projektionsgrafikform, so dass die Beleuchtungsvorrichtung beispielsweise als "intelligente" Einstiegsleuchte am Außenspiegel oder an einer Zierleiste oder an einem Fahrzeugschweller angeordnet sein kann zur Ausleuchtung eines Einstiegsbereiches des Fahrzeugs oder als Beleuchtungsoptik für nachgeschaltete Optikelemente verwendet werden kann.

Nach der Erfindung sind die Lichtquellen derart ausgebildet, dass Licht unterschiedlicher Farbe oder Licht einer bestimmten Farbe abgestrahlt wird. Da jede Lichtquelle einem einzigen Mikrolichtführungselement zugeordnet ist und die Mikrolichtführungselemente optisch voneinander getrennt sind, ist sichergestellt, dass Licht vorgegebener Helligkeit und/oder Farbe auf die jeweiligen Mikrolichtführungselemente trifft, ohne dass Streu- oder Fremdlicht derselben Lichtquelle über das benachbarte Mikrolichtführungselement quasi als Nebenkanal weitergeleitet würde.

Nach der Erfindung sind die Lichtquellen in einer ersten Erstreckungsfläche und die optischen Trennungen in einer zweiten Erstreckungsfläche angeordnet, wobei die erste Erstreckungsfläche und die zweite Erstreckungsfläche parallel versetzt zueinander angeordnet sind. Die jeweils aus einer Lichtquelle und einem Mikrolinsenelement bestehenden Lichtpaare ermöglichen somit eine gleichmäßig scharfe Abbildung der vorgegebenen Ausleuchtgrafik.

Nach der Erfindung sind die optischen Trennungen jeweils als Trennstege ausgebildet, die sich von einer Basisfläche einer Trennstegeeinheit erheben und in Montagestellung jeweils in Vertiefungen einer die Mikrolinsen aufnehmenden Mikrolinseneinheit eingreifen. Die Basisfläche der Trennstegeeinheit liegt flächig an einer Basisfläche der Mikrolinseneinheit an. Vorteilhaft wird hierdurch eine einfache Montage gewährleistet, wobei eine definierte Relativposition zwischen dem paarweise angeordneten Linsen und Lichtquellen erzielen lässt. Die Trennstegeinheit bzw. die Trennstege sind in Richtung der Lichtquellenerstreckungsebene bis zur Höhe der Lichtabstrahlungsfläche der Lichtquelle geführt und im Idealfall bis auf die Leiterplattenebene geführt.

Nach einer Variante der Erfindung sind der Trennstegträger und der Mikrolinseneinheit durch 2-Komponenten-Spritzgießen aus einer lichtundurchlässigen und einer lichtdurchlässigen Komponente hergestellt. Vorteilhaft kann hierdurch auf einfache und schnelle Weise eine mit Trennstegen versehene Mikrolinsenanordnung hergestellt werden.

Nach einer weiteren Variante der Erfindung kann die Trennstegeeinheit durch ein separates Metallteil gebildet sein, dass beispielsweise durch Druckgießen hergestellt ist. Vorteilhaft lassen sich hierdurch relativ geringe Wandstärken der optischen Trennungen realisieren. Vorderseitig kann die Trennstegeeinheit mit einem transparenten Kunststoffmaterial überspritzt werden zur Bildung der Mikrolinsenelemente, wobei die optischen Trennstege dicht umspritzt sind.

Nach einer weiteren Variante der Erfindung sind die optischen Trennungen aus einem lichtundurchlässigen tiefgezogenen Kunststoffmaterial gebildet, welches von einem lichtdurchlässigen Kunststoffmaterial überspritzt wird zur Bildung der Mikrolinsenelemente. Das tiefgezogene Kunststoffmaterial kann beispielsweise als eine Kunststofffolie ausgebildet sein.

Nach einer Weiterbildung der Erfindung sind die Lichtquellen als RGB-Lichtquellen, insbesondere RGB-LED, vorgesehen, um in den einzelnen Kanälen oder über alle Kanäle eine beliebige Farbe einstellen zu können oder animierte Farbverläufe und Farbübergängen realisieren zu können.

Nach einer Weiterbildung der Erfindung weist die Trennstegeeinheit auf einer der Mikrolinsenträger abgewandten Seite einen Befestigungsdom zur Befestigung an eine die Lichtquellen tragende Leiterplatte auf. Vorteilhaft können die zwischen den Trennstegen gebildeten Öffnungen zur Aufnahme der Lichtquellen dienen.

Ausführungsbeispiele der Erfindung werden nachfolgend anhand der Zeichnungen näher erläutert.

Es zeigen:
- Fig. 1: eine perspektivische Darstellung einer in einem Außenspiegel eines Fahrzeugs integrierten Beleuchtungsvorrichtung zur Erzeugung einer vorgegebenen Leuchtgrafik,
- Fig. 2a: ein erster Montageschritt zur Herstellung einer Beleuchtungsvorrichtung nach einer ersten Ausführungsform, wobei eine Trennstegeeinheit auf einer Leiterplatte montiert ist,
- Fig. 2b: Darstellung eines weiteren Montageschrittes, bei dem Mikrolinsenelemente auf den Trennstegeeinheit gemäß Figur 2a aufgespritzt werden,
- Fig. 2c: eine fertig umspritzte Leiterplatten-Trennstegeeinheit-MikrolinseneinheitBaugruppe,
- Fig. 3a: eine Vorderansicht eines Segmentes der Beleuchtungsvorrichtung mit scherbenförmig angeordneten Mikrolichtführungselementen und optischen Trennungen nach einer weiteren Ausführungsform der Erfindung,
- Fig. 3b: eine schematische Explosionsdarstellung zweier Komponenten der Beleuchtungsvorrichtung gemäß Figur 3a,
- Fig. 4a: eine weitere Ausführungsform der Erfindung, bei der ein Mikrolinsenbauteil erstellt und mit einem lichtundurchlässigen Kunststoffmaterial rückseitig übergossen wird,
- Fig. 4b: eine Darstellung des Mikrolinsenbauteils gemäß Figur 4a im fertiggegossenen Zustand der Trennelemente,
- Fig. 5a: eine Beleuchtungsvorrichtung nach einer weiteren Ausführungsform, bei der ein Mikrolinsenbauteil rückseitig mit einer Lackierschablone versehen ist,
- Fig. 5b: eine Darstellung des Mikrolinsenbauteils gemäß Figur 5a während des Einbringens der Lackierung bestehend aus lichtundurchlässigem Kunststoffmaterial,
- Fig. 5c: eine Darstellung des fertig lackierten Mikrolinsenbauteils,
- Fig. 6a: eine weitere Ausführungsform der Beleuchtungsvorrichtung mit einem Mikrolinsenbauteil enthaltend rinnenförmige Ausnehmungen,
- Fig. 6b: eine Darstellung des Mikrolinsenbauteils gemäß Figur 6a während des mechanischen Einbringens von Trennstegen aus einem Blechmaterial und
- Fig. 6c: eine Darstellung des fertig gestellten Mikrolinsenbauteils mit eingepressten Trennungsstegen.

Eine erfindungsgemäße Beleuchtungsvorrichtung ist vorzugsweise als eine Einstiegsleuchte 1 ausgebildet, die in einem Außenspiegel 2 eines Fahrzeugs integriert ist. Die Einstiegsleuchte 1 dient zur Erzeugung einer Leuchtgrafik 3, mittels derer ein Bereich vor einer Fahrertür des Fahrzeugs ausgeleuchtet wird. Die Einstiegsleuchte 1 weist eine Ansteuerung auf, die beispielsweise mittels einer zentralen Fernbedienung des Fahrzeugschlüssels durch den Fahrer aktivierbar ist.

Alternativ kann die erfindungsgemäße Beleuchtungsvorrichtung auch in einer Zierleiste entlang der Türen des Fahrzeugs oder in seitlichen Fahrzeugschwellern unterhalb der Türen oder im Bereich eines vorderen und/oder hinteren Radkastens des Fahrzeugs angeordnet sein. Alternativ kann die Beleuchtungsvorrichtung in einem Innenraum des Fahrzeugs zur Beleuchtung eines Ausleuchtbereiches im Innenraum angeordnet sein, beispielsweise zur Beleuchtung von fest vorgegebenen Ausleuchtbereichen der Armaturentafel oder der Mittelkonsole.

Die Einstiegsleuchte 1 weist als Lichtquelleneinheit eine Mehrzahl von Lichtquellen 4 auf, die in einer Erstreckungsfläche E1 angeordnet sind. Vorzugsweise ist die Erstreckungsfläche E1 eben ausgebildet. Die Lichtquellen 4 sind vorzugsweise als LED-Lichtquellen ausgebildet. Die Lichtquellen 4 können als Chips auf einer gemeinsamen Leiterplatte 5 angeordnet sein.

In Hauptabstrahlrichtung H der Lichtquellen 4 vor denselben ist eine Lichtführungseinheit angeordnet, die eine Mehrzahl von als Mikrolichtführungselemente 6 ausgebildeten Lichtführungselementen sowie zwischen den Mikrolichtführungselementen 6 angeordnete optische Trennungen 7 aufweist. Die Mikrolichtführungselemente 6 und die optischen Trennungen 7 sind vorzugsweise fest miteinander verbunden und bilden eine gemeinsame Baueinheit. Die Mikrolichtführungselemente 6 erstrecken sich in einer Erstreckungsfläche E2, die parallel versetzt zu der Erstreckungsfläche E1 der Lichtquellen 4 angeordnet ist. Vorzugsweise ist die Erstreckungsfläche E2 der Mikrolichtführungselemente 6 eben ausgebildet. Die Mikrolichtführungselemente 6 sind in Hauptabstrahlrichtung H vor den Lichtquellen 4 angeordnet. Die Mikrolichtführungselemente 6 sind vorzugsweise als Mikrolinsenelemente aus einem transparenten und/oder glasklaren Material, beispielsweise Kunststoffmaterial, hergestellt.

Die optischen Trennungen sind vorzugsweise als Trennstege ausgebildet, die in Hauptabstrahlrichtung H hinter den Mikrolinsenelementen 6 und/oder zwischen benachbarten Mikrolinsenelementen 6 angeordnet sind. Die optischen Trennungen 7 bestehen aus einem lichtundurchlässigen, beispielsweise schwarzen, Material, so dass auf dasselbe treffende Licht überwiegend und/oder annährend vollständig und/oder vollständig absorbiert wird.

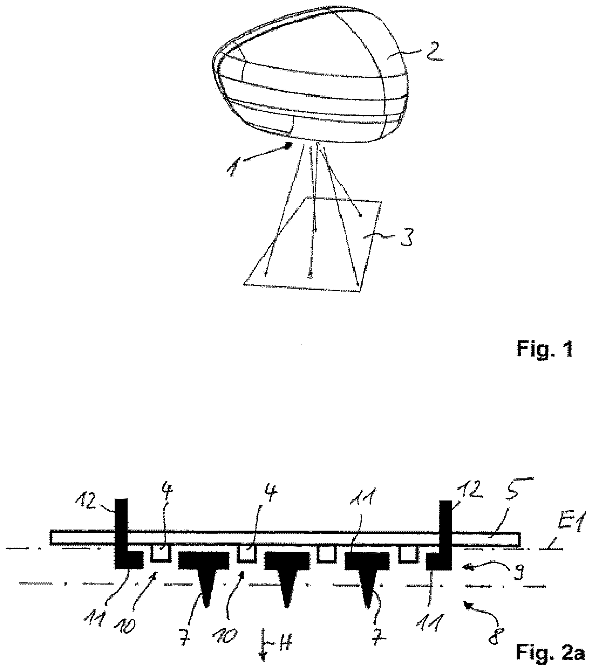

Nach einer ersten Ausführungsform der Beleuchtungsvorrichtung gemäß den Figuren 2a bis 2c werden die Mikrolinsenelemente 6 getrennt zu den optischen Trennungen 7 hergestellt. Die optischen Trennstege 7 sind in einer Trennstegeeinheit 8 integriert, die über einen Trennstegeträger 9 und die von diesem auf einer den Lichtquellen 4 abgewandten Seite abragende Trennstege 7 aufweist. Der Trennstegeträger 9 erstreckt sich in einer zu der Erstreckungsfläche E1 parallelen Ebene und weist Durchlässe 10 auf, die in der Montagestellung jeweils fluchtend zu einer Lichtquelle 4 angeordnet sind. Die Lichtquellen 4 können in den Durchlass 10 des Trennstegeträgers 9 eingreifen. Eine Basisfläche 11 des Trennstegeträgers 9 erstreckt sich somit in einer Ebene, die die Lichtquellen 4 schneidet. Auf einer den Trennstegen 7 abgewandten Seite ragen von der Basisfläche 11 des Trennstegeträgers 9 Befestigungsdome 12 ab, mittels derer die Trennstegeeinheit 8 an der Leiterplatte 5 der Leuchteinheit befestigbar ist.

Die Trennstegeeinheit 8 ist einstückig ausgebildet und kann beispielsweise durch Spritzgießen hergestellt werden. Alternativ kann die Trennstegeeinheit 8 auch aus einem Metallmaterial, insbesondere Blechmaterial, bestehen. Beispielsweise kann die Trennstegeeinheit 8 als ein Druckgießbauteil ausgebildet sein, mittels dessen relativ dünnwandige Trennstege 7 ausbildbar sind. Im vorliegenden Ausführungsbeispiel sind die Trennstege 7 zu einem freien Ende desselben hin verjüngend ausgeformt.

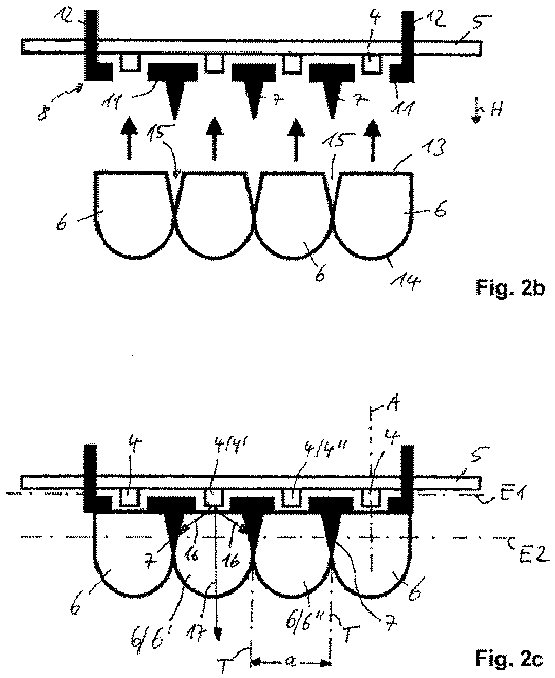

Nachdem die Trennstegeeinheit 8 hergestellt und mit der die Lichtquellen 4 aufweisende Leiterplatte 5 verbunden worden ist, wird die so gebildete Baugruppe in ein Spritzgießwerkzeug eingelegt und mit einem transparenten Kunststoff- oder mit einem optischen, transparenten Silikonmaterial überspritzt bzw. umspritzt, wobei jeweils den Lichtquellen 4 zugeordnete Mikrolinsenelemente 6 ausgeformt werden, s. Figur 2b und Figur 2c. Die vorzugsweise gleich ausgebildeten Mikrolinsenelemente 6 weisen vorzugsweise eine ebene Lichteintrittsfläche 13 auf einer den Lichtquellen 4 zugewandten Seite und eine asphärische Fläche 14 auf einer den Lichtquellen 4 abgewandten Seite auf. Die Mikrolinsenelemente 6 haften an den Flanken der Trennstege 7 sowie an einer Vorderseite der Basisfläche 11 an und sind damit fest mit der Trennstegeeinheit 8 verbunden. Die Trennstege 7 erstrecken sich in in einem Grenzbereich zwischen zwei benachbarten Mikrolinsenelementen 6 ausgebildeten Vertiefungen 15, wobei die Vertiefungen 15 entsprechend der Ausbildung der Trennstege 7 in Hauptabstrahlrichtung H verjüngend verlaufen.

Die Trennstege 7 bzw. die Basisfläche 11 des Trennstegeträgers 9 bewirken, dass ein Streulichtanteil 16 eines von einer ersten Lichtquelle 4' abgestrahlten Lichtes 17 nicht in einer benachbarten Lichtquelle 4" zugeordneten Mikrolinsenelement 6 eintreten kann. Stattdessen wird dieser Streulichtanteil 16 an den Trennstegen 7 bzw. Basisfläche 11 absorbiert. Das Licht der ersten Lichtquelle 4' tritt ausschließlich in das denselben zugeordnete und vor demselben angeordneten Mikrolinsenelement 6' ein. Von diesem Mikrolinsenelement 6' tritt ausschließlich das von der ersten Lichtquelle 4' abgestrahlte Licht 17 aus. Das von der zweiten Lichtquelle 4" abgestrahlte Licht 17 tritt ausschließlich in das vor demselben angeordnete Mikrolinsenelement 6" ein. Von diesem Mikrolinsenelement 6" tritt ausschließlich das von dem der zweiten Lichtquelle 4" abgestrahlte Licht 17 aus. Ein unerwünschtes Stör- bzw. Fremdlicht 16 benachbarter Lichtquellen tritt somit nicht aus den jeweiligen Mikrolinsenelementen 6 aus. Hierdurch ist sichergestellt, dass von den jeweiligen Mikrolinsenelementen 6 nur das Licht 17 der unmittelbar in Hauptabstrahlrichtung H hinter denselben angeordnete Lichtquellen 4 an der Fläche 14 der Mikrolinsenelemente 6 austreten kann. Es wird somit ausschließlich die den jeweiligen Mikrolinsenelementen 6 zugeordneten Lichtquellen 4 abgebildet.

Der Lichtquellen 4 bzw. der Mikrolinsenelemente 6 können matrixartig in einer Anzahl von Zeilen und Spalten angeordnet sein. Alternativ können die Lichtquellen 4 und die Mikrolinsenelemente 6 auch reihenförmig bzw. langgestreckt ausgebildet sein. Die Trennstege 7 erstrecken sich jeweils in einer Ebene T, die senkrecht zu der Leiterplatte 5 bzw. parallel zu einer optischen Achse A der Lichtquellen 4 verläuft. Ein Abstand a benachbarter Trennstege 7 bzw. Ebenen T derselben liegt in einem Bereich zwischen 0,1 mm und 3 mm, bevorzugterweise im Bereich von 0,1 mm bis 2 mm, besonders bevorzugterweise im Beriech von 0,3 mm bis 0,5 mm.

Im vorliegenden Ausführungsbeispiel gemäß den Figuren 2a bis 2c sind die Lichtquellen 4 als einfarbige lichtabstrahlende Lichtquellen ausgebildet. Beispielsweise können die einen Lichtquellen 4 weißes Licht abstrahlen, während die anderen Lichtquellen 4 blaues oder grünes Licht oder Licht einer weiteren Farbe abstrahlen. Darüber hinaus sind die Lichtquellen 4 dimmbar, so dass sie Licht unterschiedlicher Helligkeit bzw. Lichtstärke abstrahlen können. Den Lichtquellen 4 ist eine Ansteuerung zugeordnet mit einem vorgegebenen Ansteuerungsschema zur Erzeugung der vorgegebenen Leuchtgrafik 3 der Einstiegsleuchte 1. Beispielsweise kann die Leuchtgrafik 3 als eine Farbgrafik ausgebildet sein, mittels derer Logos oder andere Zeichen abbildbar sind. Die Leuchtgrafik 3 kann hierzu örtlich und/oder zeitlich Bereiche unterschiedlicher Helligkeit und/oder Farbe aufweisen. Vorteilhaft kann hierdurch beispielsweise eine markentypische Differenzierung der Fahrzeughersteller erreicht werden.

Alternativ können die Lichtquellen 4 auch als RGB-Lichtquellen (RGB-LED) ausgebildet sein, die jeweils unterschiedliche Lichtfarbe abstrahlen können, so dasseine freie Farbeinstellung oder eine Farbanimation ermöglicht wird.

Die Mikrolinseneinheit 18 der Ausführungsbeispiele besteht aus mehreren Mikrolinsen 6.

Gleiche Bauteile bzw. Bauteilfunktionen der Ausführungsführungsbeispiele sind mit den gleichen Bezugsziffern versehen.

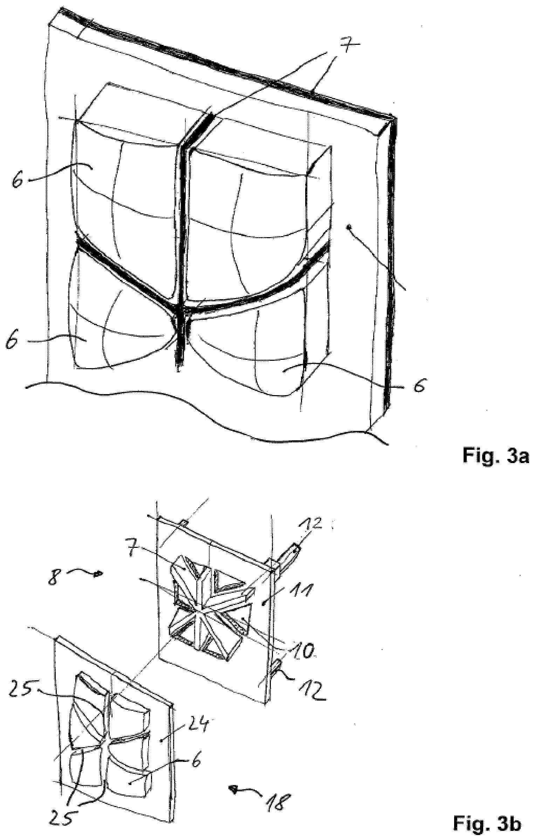

Nach einer weiteren Ausführungsform der Erfindung gemäß den Figuren 3a und 3b können die Trennstegeeinheit 8 und die Mikrolinseneinheit 18 auch durch 2-Komponenten-Spritzgießen aus einer lichtundurchlässigen Komponente für die Trennstegeeinheit 8 und einer lichtdurchlässigen Komponente für die Mikrolinseneinheit 18 hergestellt werden.

In einem ersten Schritt des Spritzgießens wird das lichtundurchlässige Kunststoffmaterial in einem Formraum der Spritzgießvorrichtung eingespritzt. In einem zweiten Schritt wird dann ein transparenter, glasklarer Kunststoff über die bereits geformte Trennstegeeinheit 8 gespritzt und somit die Mikrolinseneinheit 18 gebildet. Das so gefertigte Spritzgießbauteil wird dann über die Befestigungsdome 12 an der Leiterplatte 5 befestigt.

Nach einer nicht dargestellten alternativen Ausführungsform der Erfindung kann die Trennstegeeinheit 8 durch Tiefziehen hergestellt werden, wobei ein entsprechend der Form der Trennstegeeinheit 8 tiefgezogenes Kunststoffmaterial aus einem undurchsichtigen Kunststoffmaterial verformt wird. Beispielsweise kann hierzu eine undurchsichtige Kunststofffolie verwendet werden. Die verformte Folie bzw. das tiefgezogene Kunststoffmaterial kann dann in einem Spritzgießwerkzeug eingelegt und mit dem transparenten Kunststoff überspritzt werden zur Bildung der Mikrolinseneinheit 18. Alternativ kann die Trennstegeeinheit 8 auch separat gespritztes Bauteil erstellt sein, dass dann mit dem transparenten Kunststoff überspritzt wird zur Bildung der Mikrolinseneinheit 18.

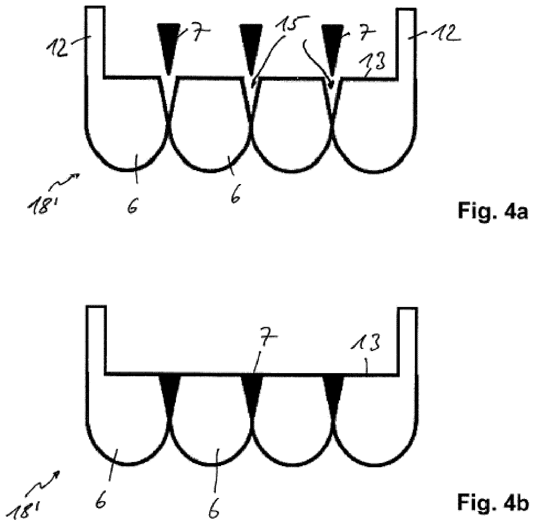

Nach einer nicht von den Patentansprüchen umfassten Ausführungsform gemäß den Figuren 4a und 4b wird die Mikrolinseneinheit 18' aus einem transparenten Kunststoffmaterial durch Spritzgießen hergestellt. Im Unterschied zu den vorhergenannten Beispielen weist die Mikrolinseneinheit 18' randseitig die Befestigungsdome 12 zur Befestigung an der Leiterplatte 5 auf. In einem weiteren Schritt wird die Mikrolinseneinheit 18' in einer Haltevorrichtung eingelegt und mit einem flüssigen, undurchsichtigen, beispielsweise schwarzen Kunststoffmaterial (PU-Kunststoffmaterial), übergossen. Das undurchsichtige Kunststoffmaterial füllt die

Vertiefungen 15 der Mikrolinseneinheit 18' auf, verbindet sich mit dem transparenten Kunststoff der Mikrolinseneinheit 18 und bildet somit die lichtundurchlässigen Trennstege 7 zwischen den Mikrolinsenelementen 6. Zum bündigen Abschluss der Trennstege 7 mit der Eintrittsfläche 13 der Mikrolinsenelemente 6 kann überstehendes Material beispielsweise durch Fräsen abgearbeitet oder abgeschliffen werden.

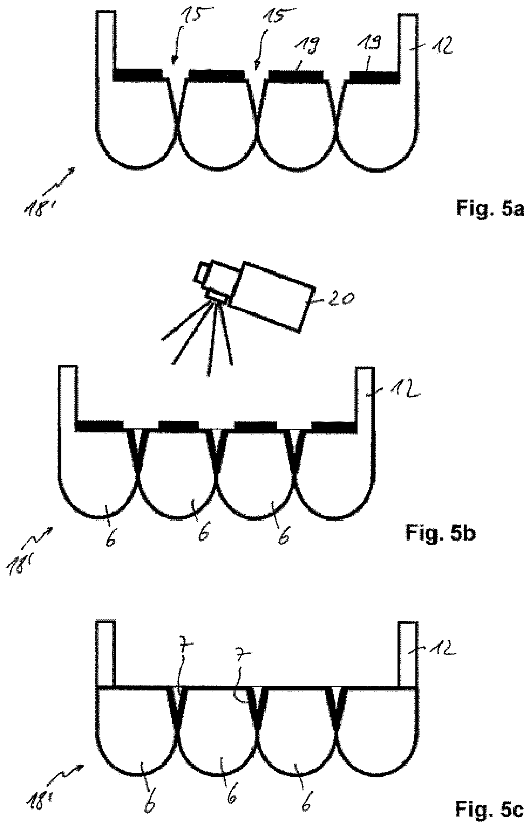

Nach einer nicht von den Patentansprüchen umfassten Ausführungsform gemäß den Figuren 5a bis 5c kann die Mikrolinseneinheit 18' mit den Trennstegen 7 durch Lackierung derselben verbunden werden. Hierzu wird die in einer Haltevorrichtung eingesetzte Mikrolinseneinheit 18' mit einer Lackierschablone 19 versehen, wobei die Lackierschablone 19 die vorgegebene Eintrittsfläche 13 der Mikrolinsenelemente 6 abdeckt. Nur die Vertiefungen 15 bleiben frei. In einem weiteren Schritt erfolgt mittels einer Lackiereinrichtung 20 das Lackieren der Eintrittsseite der Mikrolinseneinheit 18', wobei lediglich eine Oberfläche der Vertiefungen 15 mit der Lackierung versehen wird. Nach Entfernen der Lackierschablone 19 bildet die Lackierung die Trennstege 7.

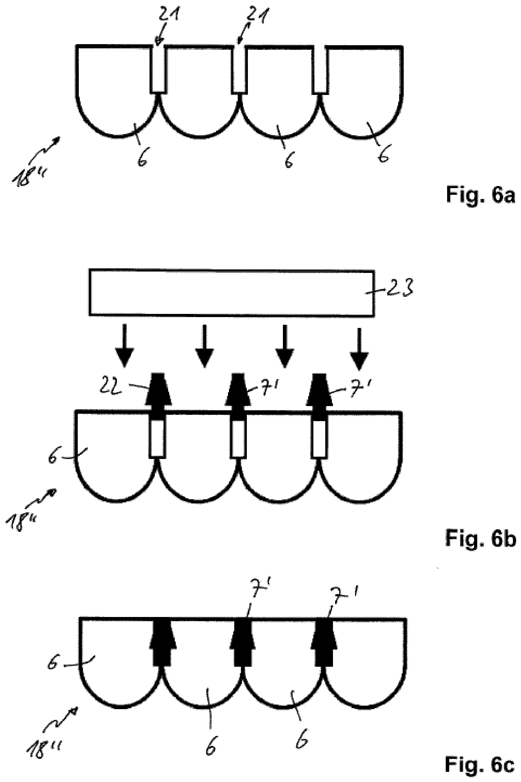

Nach einer nicht von den Patentansprüchen umfassten Ausführungsform gemäß den Figuren 6a bis 6c kann eine Mikrolinseneinheit 18" beispielsweise durch Spritzgießen aus einem transparenten Kunststoffmaterial hergestellt sein, wobei zwischen den Mikrolinsenelementen 6 eingangsseitig rinnenförmige Ausnehmungen 21 gebildet werden. In einem weiteren Schritt werden einzelne Trennstege 7' aus einem Metallmaterial in die rinnenförmigen Ausnehmungen 21 eingesetzt und/oder eingepresst. Die Trennstege 7' können aus einem Blechmaterial bestehen. Sie können durch Laserschneiden oder Stanzen hergestellt sein. Vorzugsweise sind die Trennstege 7' widerhakenförmig ausgebildet mit einem V-förmigen Kopf 22, so dass sie sich in der Montageposition innerhalb der Ausnehmung 21 verkrallen können. Die Trennstege 7' werden mittels einer Pressvorrichtung 23 in die Ausnehmung 21 der Mikrolinseneinheit 18" eingedrückt.

Es versteht sich, dass die vorstehend genannten Merkmale der Ausführungsbeispiele je für sich oder zu mehreren in beliebiger Kombination Verwendung finden können. Die beschriebenen Ausführungsbeispiele sind nicht als abschließende Aufzählung zu verstehen.

### Bezugszeichenliste

- 1: Einstiegsleuchte
- 2: Außenspiegel
- 3: Leuchtgrafik
- 4,4',4": Lichtquellen
- 5: Leiterplatte
- 6: Mikrolinsenelemente
- 7,7': optische Trennungen
- 8: Trennstegeeinheit
- 9: Trennstegeträger
- 10: Durchlass
- 11: Basisfläche
- 12: Befestigungsdome
- 13: Eintrittsfläche
- 14: asphärische Form
- 15: Versteifung
- 16: Streulichtanteil
- 17: Licht
- 18,18',18": Mikrolinseneinheit
- 19: Lackierschablone
- 20: Lackiereinrichtung
- 21: Rinnenförmige Ausnehmung
- 22: V-förmiger Kopf
- 23: Pressvorrichtung
- 25: Schlitze
- A: optische Achse
- T: Ebene
- a: Abstand
- H: Hauptabstrahlrichtung
- E1,E2: Erstreckungsfläche

## Patentansprüche

1. Beleuchtungsvorrichtung für Fahrzeuge mit einer Mehrzahl von Lichtquellen (4, 4', 4") und mit einer Mehrzahl von jeweils den Lichtquellen (4, 4', 4") an zugeordneten Lichtführungselementen (6, 6', 6"), die in Hauptabstrahlrichtung (H) vor den Lichtquellen (4, 4', 4") angeordnet sind,
wobei die Lichtführungselemente (6, 6', 6") als Mikrolichtführungselemente (6, 6', 6") ausgebildet sind und zwischen benachbarten Mikrolichtführungselementen (6, 6', 6") und/oder in Hauptabstrahlrichtung (H) hinter den Mikrolichtführungselementen (6, 6', 6") eine optische Trennung (7, 7') vorgesehen ist, so dass ein von einer ersten Lichtquelle (4') abgestrahlter Streulichtanteil (16) nicht von einem einer zweiten Lichtquelle (4") zugeordneten Lichtführungselement (6") einstrahlbar bzw. abstrahlbar ist, wobei
das Mikrolichtführungselement (6, 6', 6") als ein Mikrolinsenelement (6, 6', 6") ausgebildet ist und benachbarte optische Trennungen (7, 7') in einem Abstand (a) zwischen 0,1 mm und 3 mm angeordnet sind, wobei
die Lichtquellen (4, 4', 4") derart ausgebildet sind, dass sie jeweils Licht (17) unterschiedlicher Farbe abstrahlen oder dass sie jeweils Licht einer fest vorgegebenen Farbe abstrahlen, wobei entsprechend einer zu projizierenden vorgegebenen Farbgrafik die Lichtquellen (4, 4', 4") verteilt über eine Erstreckungsfläche (E1) angeordnet sind, und wobei
eine Ansteuerung für die Lichtquellen (4, 4', 4") vorgesehen ist mit einem Ansteuerungsschema für die vorgegebene Farbgrafik und wobei
die optischen Trennungen (7, 7') und die Mikrolinsenelemente (6, 6', 6") matrixartig in einer zu einer Erstreckungsfläche (E1) der Lichtquellen (4) parallelen Erstreckungsebene (E2) angeordnet sind, **dadurch gekennzeichnet, dass** die optischen Trennungen (7, 7') jeweils als Trennstege ausgebildet sind, die sich von einer Basisfläche (11) einer Trennstegeeinheit (8) erheben und in einer Montagestellung in Vertiefungen (15) oder Schlitze (25) einer die Mikrolinsenelemente (6) aufweisenden Mikrolinseneinheit (18) eingreifen, wobei die Basisfläche (11) der Trennstegeeinheit (8) flächig an einer Basisfläche (24) der Mikrolinseneinheit (18) anliegt, und
- dass die Trennstegeeinheit (8) und die Mikrolinseneinheit (18) durch 2-Komponenten-Spritzgießen aus einer lichtundurchlässigen Komponente für die Trennstegeeinheit (8) und einer lichtdurchlässigen Komponente für die Mikrolinseneinheit (18) herstellbar sind oder
- dass die Trennstegeeinheit (8) einstückig aus einem lichtundurchlässigen Material besteht, das durch Spritzgießen hergestellt ist, oder dass die Trennstegeeinheit (8) als separates Metallteil ausgebildet ist, wobei die Trennstege (7) verjüngend zu einem freien Ende desselben ausgebildet sind, und dass die Trennstegeeinheit (8) von einem transparenten Kunststoffmaterial überspritzt ist zur Bildung der Mikrolinseneinheit (18), oder
- dass die optischen Trennungen (7) aus einem tiefgezogenen Kunststoffmaterial gebildet oder als separat gespritztes Bauteil erstellt sind und dass die optischen Trennungen (7) von einem transparenten Kunststoffmaterial überspritzt sind zur Bildung der Mikrolinseneinheit (18).

2. Beleuchtungsvorrichtung nach Anspruch 1, **dadurch gekennzeichnet, dass**
die Trennstegeeinheit (8) auf einer der Mikrolinsenträgereinheit (18) abgewandten Seite oder die Mikrolinsenträgereinheit (18') auf einer den Lichtquellen (4, 4', 4") zugewandten Seite einen Befestigungsdom (12) zur Befestigung an einer die Lichtquellen (4) tragenden Leiterplatte (5) aufweist.

## Claims

1. Illumination device for vehicles with a plurality of light sources (4, 4', 4") and with a plurality of light guidance elements (6, 6', 6") allocated to each of the light sources (4, 4', 4") that are arranged in the main radiation direction (H) in front of the light sources (4, 4', 4"), wherein
the light guidance elements (6, 6', 6") are designed as micro light guidance elements (6, 6', 6") and an optical separation (7, 7') is provided for between adjacent micro light guidance elements (6, 6', 6") and/or in the main radiation direction (H) behind the micro light guidance elements (6, 6', 6") such that a portion of the scattered light (16) emitted by a first light source (4') cannot be irradiated or radiated by a light guidance element (6") allocated to a second light source (4"), wherein
the micro light guidance element (6, 6', 6") is designed as a micro lens element (6, 6', 6") and adjacent optical separations (7, 7') are arranged at a distance (a) of between 0.1 mm and 3 mm, wherein
the light sources (4, 4', 4") are designed in such a way that they each emit light (17) of a different colour or that they each emit light of a predefined colour, wherein, in accordance with
a predefined colour graphic to be projected, the light sources (4, 4', 4") are arranged distributed across an extension area (E1), and wherein actuation is provided for the light sources (4, 4', 4") with an actuation scheme for the predefined colour graphic, and wherein
the optical separations (7, 7') and the micro lens elements (6, 6', 6") are arranged in the form of a matrix in an extension level (E2) parallel to an extension area (E1) of the light sources (4), **characterized in that** the optical separations (7, 7') are each designed as partitions that rise up from a base area (11) of a partitioning unit (8) and in an installation position engage in recesses (15) or slots (25) in a micro lens unit (18) featuring the micro lens elements (6), wherein the base area (11) of the partitioning unit (8) lies flat over an area of the base area (24) of the micro lens unit (18), and
- **in that** the partitioning unit (8) and the micro lens unit (18) can be manufactured using two-component injection moulding from an opaque component for the partitioning unit (8) and a translucent component for the micro lens unit (18), or
- **in that** the partitioning unit (8) consists of one piece made of opaque material that is manufactured using injection moulding or **in that** the partitioning unit (8) is designed as a separate metal part, wherein the separators (7) are designed as being tapered towards a free end of the same, and **in that** the partitioning unit (8) is over-moulded by a transparent plastic material to form the micro lens unit (18), or
- **in that** the optical separators (7) are formed from a deep drawn plastic material or are created as a separately moulded component and **in that** the optical separators (7) are over-moulded by a transparent plastic material for forming the micro lens unit (18).

2. Illumination device according to Claim 1, **characterized in that**
the partitioning unit (8) features, on a side facing away from the micro lens carrier unit (18) or the micro lens carrier unit (18') facing towards the light sources (4, 4', 4"), a fastening mandrel (12) for mounting on a printed circuit board (5) bearing the light sources (4).

## Revendications

1. Dispositif d'éclairage pour véhicules avec plusieurs sources lumineuses (4, 4', 4") et plusieurs éléments de guidage de la lumière (6, 6', 6") associés respectivement aux sources lumineuses (4, 4', 4") disposés dans le sens de rayonnement principal (H) devant les sources lumineuses (4, 4', 4"),
les éléments de guidage de la lumière (6, 6', 6") étant conçus comme des microéléments de guidage de la lumière (6, 6', 6") et une séparation optique (7, 7') étant prévue entre des microéléments de guidage de la lumière voisins (6, 6', 6") et/ou derrière les microéléments de guidage de la lumière (6, 6', 6") dans le sens de rayonnement principal (H), de sorte qu'une partie de la lumière diffusée (16) émise par une première source lumineuse (4') ne peut pas être rayonnée ou n'est pas rayonnée par un élément de guidage de lumière (6") associé à une deuxième source lumineuse (4"),
le microélément de guidage de la lumière (6, 6', 6") étant conçu comme un microélément de lentille (6, 6', 6") et des séparations optiques voisines (7, 7') étant disposées à une distance (a) comprise entre 0,1 mm et 3 mm,
les sources lumineuses (4, 4', 4") étant conçues de telle sorte qu'elles émettent chacune de la lumière (17) de couleur différente ou qu'elles émettent chacune de la lumière d'une couleur prédéfinie, où
les sources lumineuses (4, 4', 4") sont réparties sur une surface d'extension (E1) en fonction d'un graphique en couleurs prédéterminé à projeter et où une commande des sources lumineuses (4, 4', 4") est prévue avec un schéma de commande pour le graphique en couleurs prédéterminé et où
les séparations optiques (7, 7') et les éléments de microlentille (6, 6', 6") sont disposés à la manière d'une matrice dans un plan d'extension (E2) parallèle à une surface d'extension (E1) des sources lumineuses (4), **caractérisé en ce que** les séparations optiques (7, 7') sont réalisées chacune sous la forme d'une barrette de séparation, qui s'élève depuis une surface de base (11) d'une unité de barrettes de séparation (8) et qui, dans une position de montage, s'engagent dans des creux (15) ou des fentes (25) d'une unité de microlentilles (18) présentant les éléments de microlentilles (6), la surface de base (11) de l'unité de barrettes de séparation (8) étant appliquée contre une surface de base (24) de l'unité de microlentilles (18), et
- et **en ce que** l'unité de barrettes de séparation (8) et l'unité de microlentilles (18) peuvent être fabriquées par moulage par injection à deux composants à partir d'un composant opaque pour l'unité de barrettes de séparation (8) et d'un composant transparent pour l'unité de microlentilles (18) ou
- **en ce que** l'unité de barrettes de séparation (8) est constituée d'une seule pièce d'un matériau opaque fabriqué par moulage par injection, ou **en ce que** l'unité de barrettes de séparation (8) est réalisée sous la forme d'une pièce métallique séparée, les barrettes de séparation (7) étant réalisés avec un rétrécissement vers l'extrémité d'une extrémité libre, et **en ce que** l'unité de barrettes de séparation (8) est surmoulée d'un matériau plastique transparent pour former l'unité de microlentilles (18), ou
- **en ce que** les séparations optiques (7) sont formées à partir d'un matériau plastique embouti ou sont réalisées sous forme de composant injecté séparément et **en ce que** les séparations optiques (7) sont surmoulées par un matériau plastique transparent pour former l'unité de microlentilles (18).

2. Dispositif d'éclairage selon la revendication 1 **caractérisé en ce que**
l'unité de barrettes de séparation (8) présente, sur un côté opposé à l'unité de support de microlentilles (18) ou l'unité de support de microlentilles (18') présente, sur un côté orienté vers les sources lumineuses (4, 4', 4"), un dôme de fixation (12) pour fixation sur une carte à circuits imprimés (5) portant les sources lumineuses (4).
